# EUROPEAN PATENT APPLICATION

(11) **EP 4 699 448 A1**
(43) Date of publication of application: **25.02.2026**
(21) Application number: 24195164.9
(22) Date of filing: 19.08.2024
(51) Int. Cl.: A22C 11/12, B65B 51/04

(54) **CURVED MAGAZINE BAR FOR CLIPPING MACHINE**

(71) Applicant: Poly-clip System GmbH & Co. KG, 65795 Hattersheim (DE)
(72) Inventor: Lerose, Santino, 65795 Hattersheim (DE); Wally, Jürgen, 65795 Hattersheim (DE); Melchert, Uwe, 65795 Hattersheim (DE)
(74) Representative: Eisenführ Speiser

(57) **Abstract**

The invention relates to a magazine bar (1) for temporarily storing and delivering closure clips (C) to a clipping machine (200), in particular to an automated clipping machine (200), wherein the magazine bar (1) comprises a clip cavity (15) for receiving closure clip (C) in a predefined orientation (29), wherein the clip cavity (15) extends along a longitudinal axis (A) of the clip cavity (15) from a magazine bar inlet end (9) to a magazine bar outlet end (11), and wherein the longitudinal axis (A) of the clip cavity (15) has at least a first curved section (17) having a first concave subsection (19) and a first convex subsection (21). The invention further relates to a clipping machine (200) comprising at least one such magazine bar (1).

## Description

The invention relates to a magazine bar for temporarily storing and delivering closure clip to a clipping machine, in particular to an automated clipping machine, wherein the magazine bar comprises a clip cavity for receiving closure clip in a predefined clip orientation, wherein the clip cavity extends along a longitudinal axis of the clip cavity from a magazine bar inlet end to a magazine bar outlet end.

Clipping machines are used for producing sausage-shaped products filled with a coherent filling, like sausages, and/or for closing bag shaped or sausage shaped packaging filled with an incoherent filling, like fruit or vegetables. To produce such products, a filling is fed into a tubular packaging or packaging casing which is stored as a supply on a filling tube, and which is closed at its front end by at least one closure clip. Filling material is filled into tubular packaging casing through the filling tube. The feeding pressure of the filling material, a provided drawing unit and/or the weight of the filling material draws the casing from the filling tube. After a predetermined amount and/or quantity of filling material has been filled into the tubular packaging casing, a plait-like portion being at least substantially free from filling material is formed thereto. At least one first closure clip is provided to and closed on said plait-like portion by a clipping device, for closing the packaging just filled. Additionally, at least one second closure clip may be provided for closing the front end of the packaging and/or product to be produced next. Subsequently, a product just produced is separated from the remaining supply of packaging and the completed product is discharged from the clipping machine. Discharge of the filled packaging or product may be employed by gravity or alone and/or by a discharge device such as a conveyor. Examples of packaging that can be filled by a clipping machine are net bags. Such net bags are often used for packaging fruit or vegetables.

There are different types of closure clips and different ways of storing and providing closure clips to a clipping machine. The closure clips typically have a clip back and a least one clip leg extending from the clip back. A clip height is defined between the clip back and a leg end opposite the clip back. Usually the closure clip have two clip legs extending from the clip back. In a clip plane, the closure clips can be substantially U-shaped, with parallel or divergent clip legs or limbs and/or with a round or flat clip back. They can, however, also be of a shape which differs from the U-shape. Moreover, a protrusion can be provided on the clip back, which can extend opposite the clip legs.

One way of providing the closure clips is by assembling them together to form a clip strip in such a way that the clips are arranged facing each other with their clip planes and by temporarily connecting the assembled clips. Such clip strips are referred to as S-clips in the art. For example, an adhesive tape can be provided at the clip backs for connecting closure clips together. In other configurations, clips can be connected to each other with small bridges of material. Such bridges can be provided between clip backs of adjacent clips and/or can be provided during manufacturing. For example, multiple clips connected at their clip planes with material bridges can be produced by injection molding of a plastic material.

During operation, a clipping machine separates the closure clips of an S-clip strip individually or in groups from such a clip strip for a clipping operation. Usually at least one clip strip is placed on a magazine bar, which stores the clips temporarily and delivers them to the clipping machine. A clipping machine may comprise only a single magazine bar or two or more magazine bars for storing clips, in particular multiple clip strips. Clipping machines for single clip operation are referred to as single-clipping machines, while clipping machines applying two clips at the same time and often having two magazine bars are referred to as double-clipping machines.

When feed of clips or a clip strip to a removal location of the magazine bar or a clip inlet of a clipping machine respectively is to be effected by the force of gravity acting on the clips, magazine bars are usually inclined with respect to the horizontal or oriented perpendicular thereto. The longitudinal axis extending from the magazine bar inlet end is angled with respect to the horizontal, preferably substantially vertically in a plane oriented in orthogonal relationship with a foundation or floor. A substantially vertical orientation however is also appropriate solely for reasons of space. At an interface of the magazine bar and the clipping machine, at which the closure clip are provided to the clipping machine from the magazine bar, the longitudinal axis of magazine bar is usually oriented substantially horizontal. In the art, magazine bars therefore usually comprise a single bend and are otherwise substantially straight.

As already mentioned, in practice the magazine bars usually have to be arranged substantially vertically or at least with a sufficiently high angle of inclination, of at least a portion of their longitudinal axis, with respect to the horizontal, so that the clip strip or closure clips can be fed to the removal location of the clipping machine solely by the force of gravity acting thereon. In practice, magazine bars are used which in the mounted condition project far above the eye level of operators standing on the ground. This makes assembly of the magazine bar on the clipping machine difficult.

Moreover, clipping machines are usually used at high cycle rates to produce large quantities of products. Production down times need to be reduced as much as possible to ensure an economic production process. Secure storage of closure clips on the magazine bar as well as reliable delivery of the closure clips to the clipping machine is of utmost importance. Jamming of one or more closure clips in the magazine bar, in the clipping machine or at the interface between the magazine bar and the clipping machine needs to be prevented. A particularly high risk of closure clips or parts thereof getting stuck or jammed exists at the interface between the magazine bar and the clipping machine, since a tool of the clipping machine provides a force to the clip or clips provided in this area for moving the clip and/or for separating a clip or a group of clips from a clip strip.

Accordingly, it is an object of the present invention to provide a magazine bar that ensures reliable operation of the clipping machine.

In a first aspect, the present invention solves this problem with a magazine bar according to claim 1. Claims 2 to 14 which are dependent to claim 1 set forth advantageous configurations. In particular, the present invention solves the above stated problem with a magazine bar for temporarily storing and delivering closure clips to a clipping machine, in particular to an automated clipping machine, wherein the magazine bar comprises a clip cavity for receiving closure clip in a predefined clip orientation, wherein the clip cavity extends along a longitudinal axis from a magazine bar inlet end to a magazine bar outlet end, and wherein the longitudinal axis of the clip cavity has at least a first curved section comprising at least a first concave subsection and a first convex subsection. Preferably, each closure clip of the closure clips to be temporarily stored and delivered has a clip back and a least one clip leg, wherein a clip height is defined between the clip back and a leg end opposite the clip back. The magazine bar comprises a magazine bar body. The clip cavity is at least partially formed in the magazine bar body. The magazine bar body can comprise a main body. The main body can be formed as a single piece or from multiple pieces. For example, the main body can be a single piece formed by an additive manufacturing method such as 3D printing. Preferably, the magazine bar body comprises an end piece. An outer contour of the magazine bar body and/or a portion of the magazine bar body can be curved substantially identical to the longitudinal axis of the clip cavity.

The clip cavity is configured to receive the closure clips in the predefined configuration. The predefined configuration is the orientation of the closure clips in the clip cavity that is intended for regular use of the magazine bar. Usually and preferably there is only a single predefined configuration suitable for normal operation. In some embodiments, it might be possible to insert closure clips into the clip cavity in orientations different to the predefined configuration or one or more clips in the clip cavity might change its orientation to an orientation different from the predefined orientation. For example, it might in some case be possible to insert the closure clip upside down. However, it shall be understood that such an orientation is not a predefined configuration. It shall be understood that the predefined configuration is an orientation of the clip at the respective position along the longitudinal axis and with respect to the corresponding section of the clip cavity in this position along the longitudinal axis. The absolute orientation of a clip may change while the clip moves through the clip cavity along the longitudinal axis but the clip can still maintain its predefined orientation with respect to the clip cavity and/or the longitudinal axis. The clip cavity is preferably configured for guiding the closure clips along the longitudinal axis. In a cross-section perpendicular to the longitudinal axis, an inner contour of the magazine bar defining the clip cavity can substantially correspond to the outer dimensions of a closure clip. For example, the clip cavity can have a substantially rectangular cross-section. The rectangular cross-section can be adapted to closely surround a closure clip. In other embodiments, the clip cavity can substantially be a negative of the clip. However, it shall be understood that some clearances can be provided to prevent jamming of closure clips in the magazine bar. Preferably, the predefined orientation is such that the clip plane of a closure clip received in the clip cavity is substantially perpendicular to the longitudinal axis of the clip cavity. The clip cavity can have a height substantially matched or adapted to a clip height of closure clips to be stored therein and/or a width substantially matched or adapted to a clip width of closure clips to be stored therein.

At the magazine bar outlet end, the closure clips are delivered to the clipping machine or a clip inlet section (clip window) of the clipping machine. The magazine bar outlet end can form or comprise an interface to the clipping machine. The magazine bar inlet end is opposite the magazine bar outlet end along the longitudinal axis. An inlet for closure clips is provided at the magazine bar inlet end. However, it shall be understood that one or more additional clip inlets could also be provided between the inlet end and the outlet end of the magazine bar. Preferably, the magazine bar comprises more than one clip inlets. During use, closure clips received in the clip cavity travel through the clip cavity substantially along the longitudinal axis of the magazine bars clip cavity.

The longitudinal axis is defined along the clip cavity. Preferably, the longitudinal axis is a central axis of the clip cavity. Particularly preferred, the longitudinal axis is an axis connecting centers of cross sections of the clip cavity. It shall be understood that changes of the outer shape of the magazine bar or the magazine bar body respectively do not necessarily change the longitudinal axis of the magazine bar as long as there is no change of the shape of the clip cavity. For example, a longitudinal axis having a first curved section having a first concave subsection and a first convex subsection could theoretically be provided in a magazine bar having a rectangular outer shape or a magazine bar having an outer L-shape.

The clip cavity can be a closed cavity having no lateral openings. Preferably, the clip cavity is an open cavity having at least a first lateral opening extending through a wall of the magazine bar. The lateral opening can allow a user to push one or more clips along the longitudinal axis and/or to loosen a stuck or jammed clip. The lateral opening preferably extends at least along a length portion of the magazine bar.

The longitudinal axis is curved in the first curved section. The longitudinal axis can have a curvature in a projection onto one or more planes. The inventors have found that by providing a first curved section having a first concave subsection and a first convex subsection, a pretension can be provided to a closure clips and/or a strip of closure clips received in the clip cavity of the magazine bar. This pretension can prevent jamming of one or more clips, in particular at the magazine bar outlet or at a transition (or interface) between the magazine bar and the clipping machine respectively. Preferably, the magazine bar is configured to provide a pretension to one or more clips received in the clip cavity that is oriented against a deformation force provided to the clip strip by a tool of a clipping machine to which the magazine bar is connected during separation of the clip from a clip strip and/or when the tool moves the clip or multiple clips. Preferably, the first curved section of the clip cavity is shaped such that a closure clip at the magazine bar outlet end is provided with a forward lean or a backward lean. A pretension provided to a clip strip or a row of abutting clips in the curved section of the clip cavity can slightly deform the clip strip and/or can slightly tilt one or more clips. Preferably, the clip back leans forward or backward along the longitudinal axis of the clip cavity with respect to its clip leg or clip legs respectively.

The magazine bar provides closure clips to a clipping machine, in particular an automated clipping machine. The magazine bar can be configured to provide a specific type of clip or multiple types of clips. Preferably, each clip of the closure clips to be temporarily stored and delivered by the magazine bar has at least one clip back and at least one, preferably two or more, clip legs extending from the clip back. The clip legs extend from the clip back substantially along a clip height. The clip height is defined perpendicular to a width of the clip back in a clip plane. A spike can be provided between the clip legs.

In a first preferred embodiment of the magazine bar, the first convex subsection is directly connected to the first concave subsection. In the preferred embodiment, no straight section is provided between the first convex subsection and the first concave subsection. Directly connecting the first concave subsection and the first convex subsection can increase the pretension provided to a clip strip provided in the clip cavity. In other embodiments, a straight subsection of the first curved section can be provided between the first concave subsection and the first convex subsection.

Preferably, a curvature of the first concave subsection and the first convex subsection is identical at least in a projection onto a first plane. A length of the first concave subsection and the first convex subsection measured along the longitudinal axis can be identical. It shall be understood that first concave subsection and first convex subsections having a substantially identical curvature and/or length are also preferred if the first concave subsection and the first convex subsection are not directly connected to each other.

The concave subsection is preferably arranged between the magazine bar outlet end and the first convex subsection along the longitudinal axis. In a direction along the longitudinal axis the concave subsection is then closer to the magazine bar outlet end than the first convex subsection.

In a preferred embodiment of the magazine bar, the first curved section of the longitudinal axis of the clip cavity further comprises a second concave subsection. Preferably, the second concave subsection is directly connected to the first convex subsection such that the longitudinal axis is continuously curved between the first concave subsection and the second concave subsection. The preferred arrangement of two concave subsections separated by a convex subsection allows to provide a strong pretension to a clip strip of closure clips received in the magazine bar. Jamming of closure clips and/or damages to closure clips can be prevented and the reliability of a clipping machine provided with a magazine bar according to the invention can be improved even more.

Preferably, the concave subsection and the convex subsection are defined in a projection of the longitudinal axis onto a first plane. The first plane preferably is oriented parallel to the longitudinal axis and parallel to a height direction of the clip cavity. The height direction preferably corresponds to a clip height of the closure clip in the predefined clip orientation. As mentioned above, the clip height can be measured between the clip back and a leg end of a clip leg opposite the clip back, in particular measured perpendicular to the clip back.

Preferably, concave subsections of the longitudinal axis bulge towards the clip back of a closure clip received in the clip cavity in the predefined configuration. Correspondingly, convex subsections of the longitudinal axis preferably bulge away from the clip back of a closure clip received in the clip cavity in the predefined configuration.

In preferred configurations of the magazine bar, the longitudinal axis of the clip cavity has a first plane curvature in a projection onto a first plane, wherein the longitudinal axis has at least a first inflection point at which a direction of the first plane curvature in the first plane changes. At the inflection point, the direction of the first plane curvature changes, for example from a left curvature to a right curvature. The inflection point therefore preferably connects the first concave subsection and the first convex subsection. However, it shall be understood that the definition of concave and convex subsection is not required if the longitudinal axis has a first inflection point at which a direction of the first plane curvature changes.

Providing the concave and convex subsections such that they are defined in a projection onto the first plane leads to a shape of the magazine bar that is particularly suited to prevent jamming of closure clips in its cavity or at a transition to the clipping machine. A pretension provided onto one or more clips and/or on a clip strip of closure clips can be provided even more effectively. Providing the concave and convex subsections in a projection onto the first plane is particularly suited to provide a pretension to a clip strip or row of clips that is adapted such that the clip back of a closure clip at the magazine bar outlet end leans slightly forward or backward with respect to the longitudinal axis and relative to its legs. This can facilitate clean separation of a closure clip from a clip strip of multiple closure clips by a tool of a clipping machine, to which the magazine bar is connected.

Preferably, the longitudinal axis of the clip cavity is curved in a projection onto a second plane parallel to the first plane in the first curved section. The longitudinal axis of the clip cavity is then curved in multiple planes. Providing, a magazine bar having a longitudinal axis curved in multiple planes can allow for a very compact design.

Preferably a direction of a second plane curvature of the projection of the longitudinal axis onto the second plane is constant. In such embodiments, the direction of curvature of the longitudinal axis does not change. However, it shall be noted that a degree of curvature can still change while the direction of the second curvature of the longitudinal axis in a projection onto a second plane is constant.

In a preferred configuration, the magazine bar further comprises a first straight section, wherein the first curved section is provided between the first straight section and the magazine bar outlet end. The first straight section is a section of the clip cavity. Preferably, the magazine bar further comprises a fixing bracket for fixing the magazine bar to the clipping machine, wherein the fixing bracket is preferably provided at first straight section or at a portion of the magazine bar body corresponding to the first straight section respectively. Providing the fixing bracket at a straight section of the magazine bar can facilitate attachment of the magazine bar to the clipping machine in the correct orientation.

Preferably, the clip cavity of the magazine bar has a straight end section extending along the longitudinal axis from the outlet end. The straight end section is the first section of the magazine bar when viewed from the outlet end. It extends from the outlet end towards the inlet end. The straight end section includes the magazine bar outlet end. The first straight end section can facilitate attachment of the magazine bar to the clipping machine. Preferably, a length of the curved section measured along the longitudinal axis lies in a range of 50% to 400%, preferably 100% to 400%, preferably 200% to 400%, preferably 200% to 350%, preferably 200% to 300%, of an end length of the straight end section measured along the longitudinal axis. The straight end section can help to prevent misalignments of closure clips at the magazine bar outlet end. Preferably, the first straight section and the first straight end section are angled to each other. In such configurations the section of the longitudinal axis of the first straight section and the section of the longitudinal axis of the straight end section are non-parallel to each other. The sections of the longitudinal axis can intersect each other or not.

According to a preferred embodiment, the magazine bar further comprises a saddle, wherein the saddle at least partially extends along the longitudinal axis in the clip cavity and wherein the saddle is configured to extend between legs of a closure clips received in the clip cavity. It shall be understood that the saddle is configured to extend between legs of the closure clips if the clips are provided in the clip cavity in the predefined orientation or when one or more clips is provided with an (intended) lean. The saddle can prevent tilting of closure clips in the clip cavity, in particular the saddle can be configured to prevent rotation of closure clips around the longitudinal axis and/or lateral tilting. Moreover, the saddle can support closure clips against forces provided to a closure clip or on a strip of closure clips during separation of a closure clip from a clip strip. Preferably, the saddle is provided in the straight end section or at least in a portion of the straight end section along the longitudinal axis. A height of the saddle perpendicular to the longitudinal axis preferably substantially matches an inner height of U-shaped closure clips and/or a leg length of the closure clips.

The saddle is preferably provided at least on an end piece of the magazine bar, wherein the end piece is attached to a magazine bar main body at a first end piece side, and wherein the magazine bar outlet end is provided on a second end piece side opposite the first end piece side. It shall be understood that the end piece is not necessarily formed from a single piece. The end piece can also comprise multiple sub-components that are assembled together to form the end piece. The saddle can protrude from the end piece and into a portion of the clip cavity provided in the magazine bar main body. Preferably, the end piece is at least partially formed from a first material and the magazine bar main body is at least partially formed from a second material different from the first material. For example and preferably, the first end piece is at least partially formed from a metal and/or the magazine bar main body is at least partially formed from a plastic material. However, bot the magazine bar main body and the end piece can be formed from metal and/or plastic. Moreover, multiple end pieces can be provided.

In preferred configurations, at least a portion of the magazine bar is formed by additive manufacturing. For example and preferably, the magazine bar main body can be 3D printed from a plastic material. Such a 3D printed magazine bar main body can then be combined with a metal end piece, which is preferably formed by subtractive manufacturing methods such as milling, turning, drilling and the like, from a blank. The magazine bar main body can be formed from a single piece or can be assembled from multiple parts. For example, the magazine bar main body could be manufactured by welding multiple curved or straight subsections together.

Preferably, the saddle comprises a tapered section, wherein the tapered section tapers away from the magazine bar outlet end at least in one dimension. Preferably, the tapered section tapers in a lateral dimension and/or a height dimension. Preferably the tapered section tapers away from the magazine bar outlet end against a direction of travel of closure clips through the clip cavity along the longitudinal axis. The tapered section can facilitate sliding of closure clip onto the saddle.

In preferred embodiments, the magazine bar further comprises a second curved section in which the longitudinal axis of the clip cavity of the magazine bar is curved. In the second curved section, the longitudinal axis can be curved in a projection onto the first plane and/or the second plane. In some embodiments, the longitudinal axis of the clip cavity of the magazine bar comprises a third curved section. In the third curved section, the longitudinal axis can have a different degree of curvature and/or direction of curvature than in the second curved section. For example, the longitudinal axis can only be curved in a projection onto the first plane in the second curved section and only in a projection onto the second plane in the third curved section.

Preferably, the first curved section of the longitudinal axis of the clip cavity is curved such that a pretension is applied to a closure clip at the outlet end that prevents jamming of a closure clip and/or curved such that a forward lean or backward lean is provided to a closure clip at the outlet end with respect to its clip legs. It shall be understood that a pretension may only be applied to a closure clip at the outlet end if a certain amount of closure clips are arranged in the clip cavity. For example, at least 10, 15, 20, 25, 30, 35, 40, 45, 50, 55, 60, 65, 70, 75, 80, 85, 90, 95 or 100 closure clips may need to be provided in the clip cavity of the magazine bar in order to apply the pretension and/or lean to the closure clip at the outlet end. A pretension may be provide such that the closure clip at the outlet end leans forward or backward by a lean angle greater 0° to 25°, preferably 1° to 15°, preferably 5° to 15°. The lean angle can be measured as the smaller angle between a clip plane of the closure clip and the height of the clip cavity.

According to an alternative second aspect, the invention solves the above mentioned problem with a magazine bar for temporarily storing and delivering closure clips to a clipping machine, in particular to an automated clipping machine, wherein the magazine bar comprises a magazine bar body and a clip cavity for receiving closure clip in a predefined orientation, wherein the clip cavity extends along a longitudinal axis from a magazine bar inlet end to a magazine bar outlet end, and wherein the clip cavity is curved such that a pretension is provided to closure clip at the outlet end. Alternatively or additionally the clip cavity can be curved such that a forward lean and/or backward lean is provided to a closure clip at the outlet end. The clip back of a forward leaning closure clip lies ahead (closer to the magazine bar outlet end) of the clip leg(s) of the closure clip with respect to the longitudinal axis of the clip cavity. Analogously, the clip back of a backward leaning closure clip lies behind the clip leg(s).

According to a third aspect, the invention solves the above mentioned problem with a clipping machine comprising a clipping tool assembly for applying one or more closure clip to a packaging and a magazine bar according to any of the preferred embodiments of the first aspect and/or of the second aspect of the invention described above.

It shall be understood that the magazine bar according to the second aspect of the invention, the clipping machine according to the third aspect of the invention and the magazine bar according to the first aspect of the invention comprise similar and identical embodiments which are in particular described in the dependent claims 2 to 14. In so far, reference is made to the above description of the magazine bar according to the first aspect of the invention.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

It shall be understood that a preferred embodiment of the present invention can also be any combination of the dependent claims or above embodiments with the respective independent claim.

In the accompanying figures
- Fig. 1: shows an isometric view of a magazine bar for a clipping machine according to a preferred embodiment;
- Fig. 2: shows a lateral view of the magazine bar according to the preferred embodiment, wherein the picture plane is parallel to a first plane;
- Fig. 3: shows a cut view through the preferred embodiment of the magazine bar illustrating a closure clip received in a clip cavity of the magazine bar in a predefined configuration;
- Fig. 4: shows a second lateral view of the magazine bar according to the preferred embodiment, wherein the viewing direction is perpendicular to the viewing direction of Fig. 2;
- Fig. 5: shows a top view of the magazine bar according to the preferred embodiment;
- Fig. 6: shows a detail of the outlet end of the preferred embodiment of the magazine bar;
- Fig. 7: shows a cut view corresponding to the detail of Fig. 6; and
- Fig. 8: shows an isometric view of a preferred embodiment of a clipping machine comprising a magazine bar according to the preferred embodiment of Figs. 1 to 7.

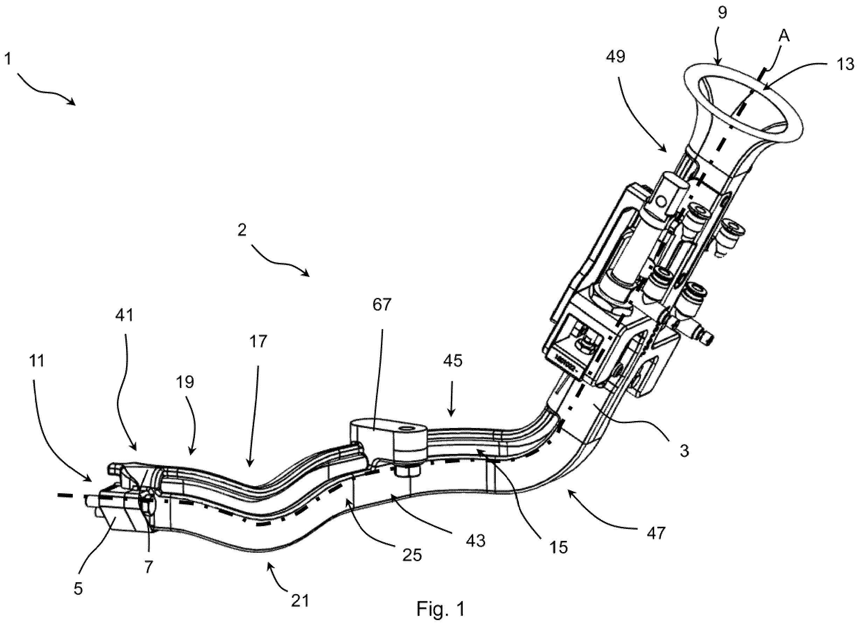

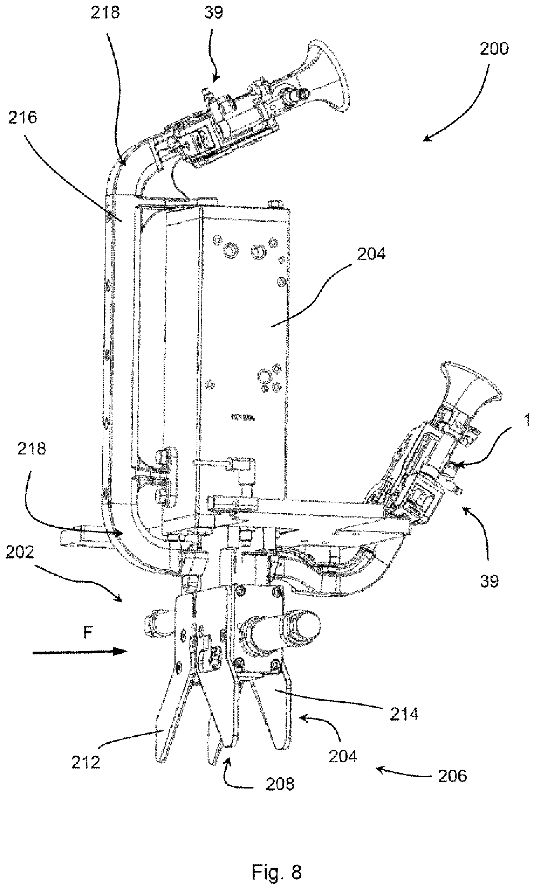

Fig. 1 shows an isometric view of a magazine bar 1 according to the invention. The magazine bar 1 comprises a magazine bar body 2 having a magazine bar main body 3 and an end piece 5. The end piece 5 and the main body 3 are formed separately. In the embodiment shown in Fig. 1, the main body 3 and the end piece 5 are attached to each other via attachment screws 7 when the magazine bar 1 is attached to a clipping machine 200 (cf. Fig. 8). In other embodiments, the main body 3 of the magazine bar 1 and the end piece 5 could be integrally formed or attached to each other prior to an attachment of the magazine bar 1 to the clipping machine 200.

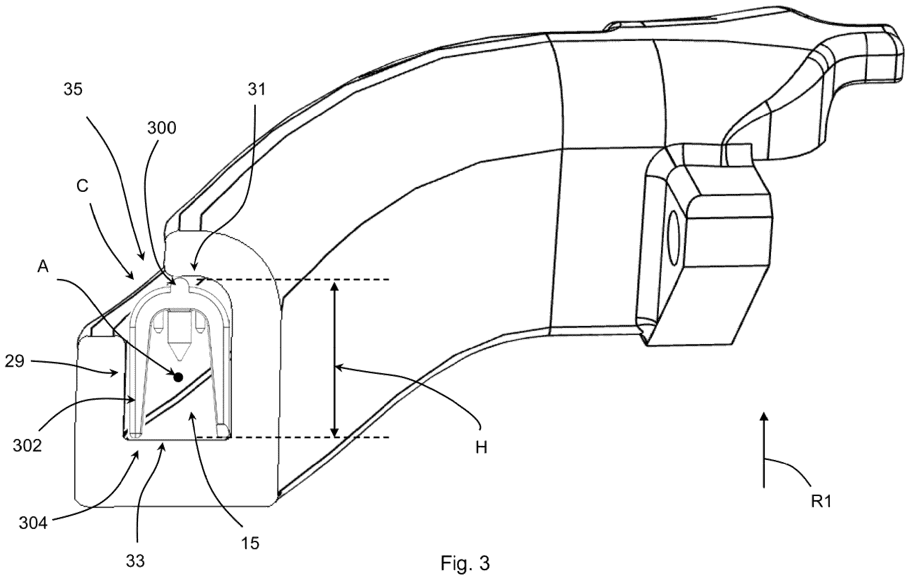

A longitudinal axis A of a clip cavity 15 extends from a magazine bar inlet end 9 to a magazine bar outlet end 11. The inlet end 9 is provided with a clip inlet 13 and is an end of the magazine bar 1 opposite the outlet end 11. The clip inlet 13 provides access to the clip cavity 15 provided in the main body 3 and the end piece 5. The clip cavity 15 is configured to receive closure clips C in a predefined orientation 29 (cf. Fig. 3). Closure clips C, in particular strips of multiple closure clips C, can be inserted into the clip cavity 15 via the clip inlet 13 located at the inlet end 9. The clip cavity 15 extends along its longitudinal axis A from the inlet end 9 to the outlet end 11. In the preferred embodiment shown in the figures, the longitudinal axis A is also a longitudinal axis A of the magazine bar 1 as the outer contour of the magazine bar body 2 matches the shape of the longitudinal axis A of the clip cavity 15.

The outlet end 11 can be attached to a corresponding interface of the clipping machine 200. At such an interface, which may also be described as a clip window, closure clips C are delivered from the magazine bar 1 or its clip cavity 15 respectively to the clipping machine 200.

The magazine bar 1 is configured to temporarily store closure clips C in a predefined configuration and to deliver the closure clips C to the clipping machine 200 as required. In the predefined configuration 29, the closure clip C are preferably provided such that a clip plane of the closure clips C received in the clip cavity 15 is substantially perpendicular to the longitudinal axis A. Close to the magazine bar outlet end 11, the clip plane can be angled to the longitudinal axis A. The predefined orientation is preferably the orientation of a closure clip that is substantially free of pretension. For example, the predefined orientation can be an orientation in which closure clip are intended to be inserted into the clip cavity 15 at the clip inlet 13. The closure clip C usually have a clip back 300 and two clip legs 302 extending from the clip back 300 to a respective leg end 304 (cf. Fig. 3). A clip height H of the closure clip C is measured perpendicular to the clip back 300 to the leg end 304. In Fig. 3, the clip plane of the closure clip C is parallel to the picture plane. The closure clip C is shown in the predefined orientation. Preferably, the clip height H is measured at a center of the clip back 300 in the width direction of the closure clip C. A height of the clip cavity 15 preferably corresponds to the clip height H and is measured parallel to the clip height H of a closure clip C received in the clip cavity 15 in the predefined configuration 29.

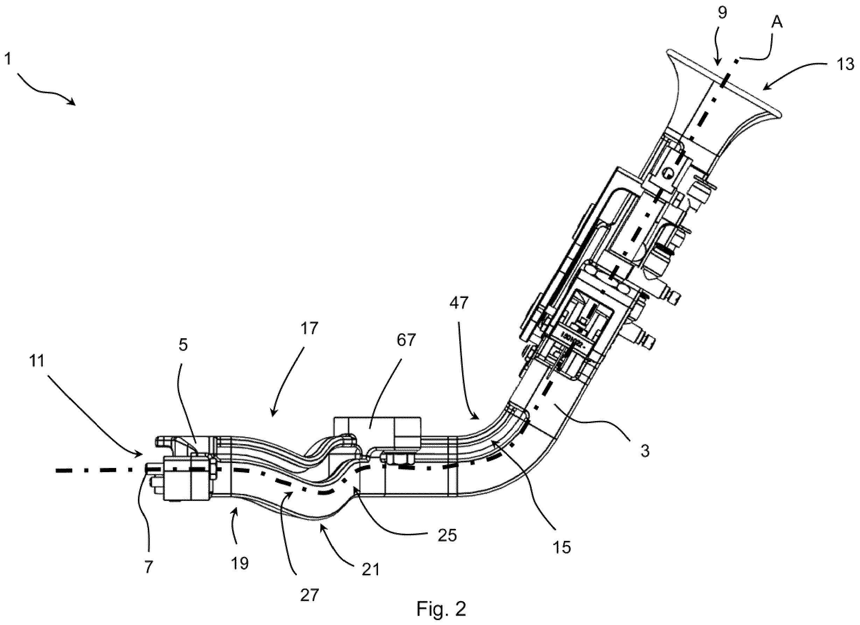

In Fig. 1 and Fig. 2, the magazine bar 1 and its clip cavity 15 are arranged such that the clip back 300 of a closure clip C is directed to the top in the predefined configuration 29 and that the clip legs 302 extend substantially vertically downward from the clip back 300.

If the closure clips C to be delivered to the clipping machine 200 by the magazine bar 1 are provided in groups of multiple closure clips C attached to each other, the closure clips C are usually separated from each other by a tool of the clipping machine 200 close to the magazine bar outlet end 11. The force provided on the closure clip C to be separated from the strip of closure clips C attached to each other, can lead to deformations of the strip of closure clips C and or to jamming of the closure clip C. For example, if in the orientation of the magazine bar 1 shown in Fig. 1, a tool advances to a closure clip C provided at the outlet end 11 of the magazine bar 1 from above, a separation force provided by the tool can lead to a bend force on and/or deformation of the strip of closure clips C still arranged in the clip cavity 15 in the plane of Fig. 2. Moreover, the forces on the closure clip C that the tool of the clipping machine 200 acts on can destroy the respective closure clip C or can lead to the closure clip jamming a portion of the clipping machine 200 or the magazine bar 1.

The shape of the magazine bar 1 of the preferred embodiment is adapted to compensate the above-described effect. It shall be understood that the magazine bar 1 is usable for strips of closure clips C as well as for closure clips C that are not connected to each other. Even for closure clips C not connected to each other by an adhesive strip or bridges of material, forces can be transferred between adjacent closure clips C as adjacent closure clips C usually abut each other.

The longitudinal axis A of the inventive magazine bar 1 has a first curved section 17 having a first concave subsection 19 and a first convex subsection 21. In the concave subsection 19 of the first curved section 17, the longitudinal axis A bulges towards the clip back 300 of a closure clip C received in the clip cavity 15 of the concave subsection 19. If the closure clip C is substantially u-shaped, the longitudinal axis A can be described to bulge into the u-shape of the closure clip C in the first concave subsection 19. In the convex subsection 21, the longitudinal axis A bulges away from the clip back 302 of a closure clip C arranged in the clip cavity 15 in the predefined configuration. That is, in Fig. 2, the longitudinal axis A bulges upwards in the first concave subsection 19 and downwards in the first convex subsection 21.

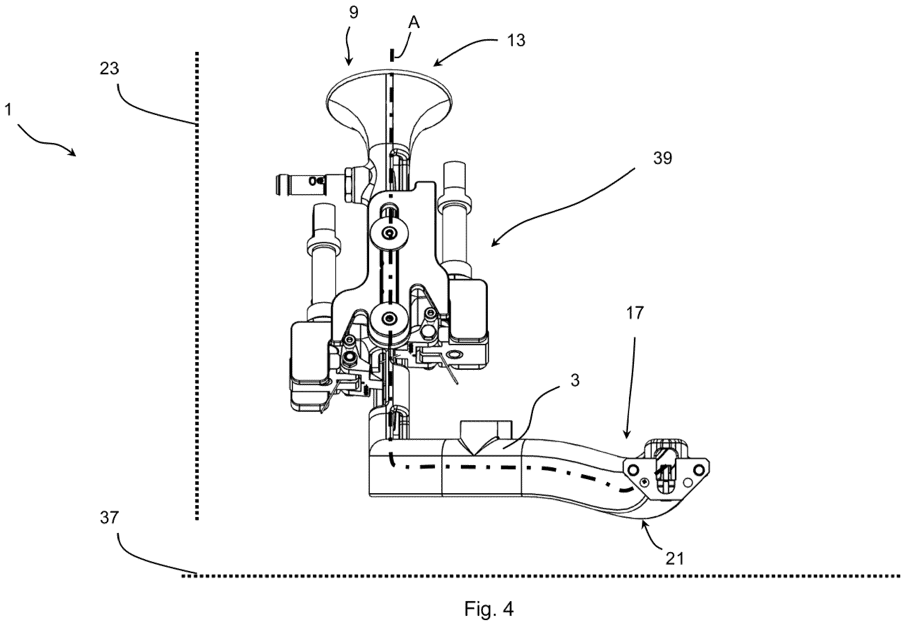

Fig. 2 shows a lateral view of the magazine bar 1. The first concave subsection 19 and the first convex subsection 21 of the first curved section 17 are defined in a projection of the longitudinal axis A onto a first plane 23. Since the longitudinal axis A of the preferred embodiment of the magazine bar 1 shown in the figures is curved in multiple dimensions, the dashed line representing the longitudinal axis A in the lateral view of Fig. 2 is a projection of the actual longitudinal axis A onto the picture plane of Fig. 2. In Fig. 2, the first plane 23 is the picture plane. For illustrative purposes, the first plane 23 is represented as a dashed line in Fig. 4 showing a lateral view of the magazine bar 1 perpendicular to the lateral view of Fig. 2. However, it shall be noted that location of the first plane 23 could also be shifted left or right in Fig. 4.

In the preferred embodiment shown in the figures, the first curved section 17 of the longitudinal axis A of the clip cavity 15 further comprises a second concave subsection 25. The second concave subsection 25 is defined analogously to the first concave subsection 19 in the first plane 23. The first convex subsection 21 is arranged between the first concave subsection 19 and the second concave subsection 25. In the shown embodiment, the longitudinal axis A is continuously curved in the first curved section 17. The first concave subsection 19, the first convex subsection 21 and the second concave subsection 25 are directly connected to each other. No straight subsections are provided between the first concave subsection 19, the first convex subsection 21 and the second concave subsection 25. The first curved section 17 allows to provide a pretension onto a clip strip or array of closure clips C extending through the first curved section 17 and to the outlet end 11 of the magazine bar 1. This pretension can at least partially compensate forces provided to the strip of closure clips C when one closure clip is separated therefrom by a tool of the clipping machine 200 and/or prevent one or more closure clips C from getting stuck in the clipping machine 200 and/or the clip cavity 15 of the magazine bar 1.

The longitudinal axis A of the clip cavity 15 describes a curve. In a projection onto the first plane 23, this curve has a first plane curvature. The first plane curvature of the curve described by the longitudinal axis A has an inflection point 27. Here, the inflection point 27 is arranged between the first concave subsection 19 and the first convex subsection 21 of the first curved section 17. However, it shall be noted that the inflection point 27 could also be spaced apart from the first concave subsection 19 by a straight portion.

Fig. 3 shows a cut view of the magazine bar 1, the cut plane being located at the first curved section 17, in particular in the first concave subsection 19. The end piece 5 is not shown in Fig. 3. The cut plane of Fig. 3 is perpendicular to the longitudinal axis A such that the longitudinal axis A is illustrated by a point.

The dimensions of the clip cavity 15 substantially correspond to the dimensions of the closure clip C received therein in the predefined orientation 29 shown in Fig. 3. A back side wall 31 of the magazine bar 1 defining the clip cavity 15 is arranged adjacent the clip back 300 and a leg side wall 33 of the magazine bar 1 defining the clip cavity 15 is arranged adjacent the clip legs 302 of the closure clip C when the closure clip C is received in the clip cavity 15 in the predefined orientation 29. While in Fig. 3 the dimensions of the clip cavity 15 substantially match the outer dimensions of the closure clip C received therein in the predefined orientation 29 it shall be noted that gaps or clearances can be provided between walls of the magazine bar 1 defining the clip cavity 15 and the closure clip C.

At least section wise, the clip cavity 15 of the preferred embodiment of the magazine bar 1 is an open cavity. The open clip cavity 15 has a lateral opening 35. The lateral opening 35 allows an operator of the clipping machine 200 to check on the amount of closure clips C stored in the magazine bar 1. Moreover, the operator can manually move the closure clips C, for example, in case one of the closure clips C received in the clip cavity 15 gets stuck.

In the preferred embodiment, the magazine bar 1 bends away from the back side wall 31 or in the direction of the leg side wall 33 of the magazine bar 1 in the first concave subsection 19. Analogously, the magazine bar 1 bends towards the back side wall 31 and away from the leg side wall 33 in the first convex subsection 21. The first concave subsection 19, the first convex subsection 21 and the second concave subsection 25 define bends of the longitudinal axis A in a height direction R1 of the magazine bar 1 that is parallel to the clip height H of a closure clip C received in the clip cavity 15 in the predefined orientation 29.

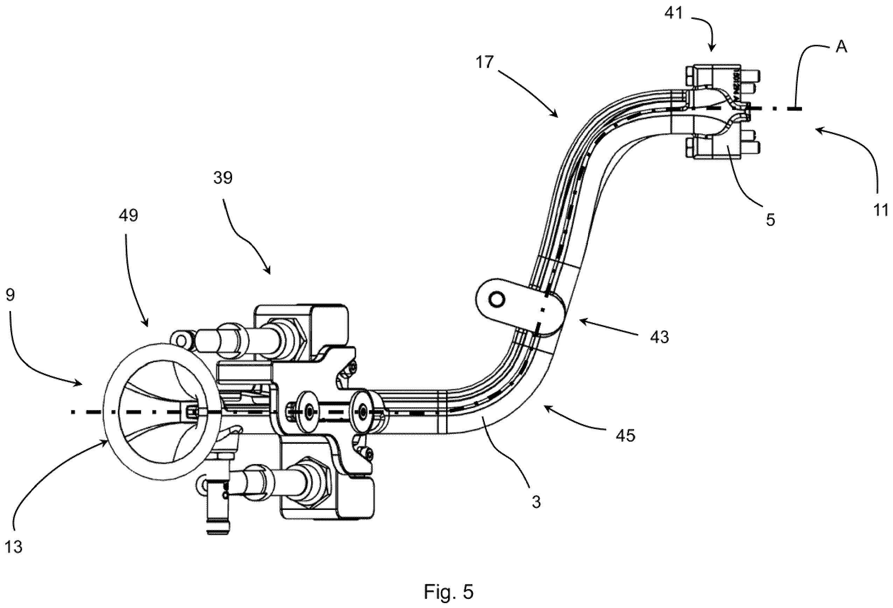

As best shown in the lateral view of Fig. 4 and the top view of Fig. 5, the clip cavity 15 or its longitudinal axis A respectively is further curved in a second direction in the first curved section 17. In a projection onto a second plane 37 that is identical to the picture plane in Fig. 5 and illustrated by a dashed line in Fig. 4, the longitudinal axis A has a second plane curvature. The second plane curvature defined in the second plane 37 and the first plane curvature defined in the first plane 23 define the three-dimensional curve describe by the longitudinal axis A of the clip cavity 15. In the preferred embodiment, the second curvature of the longitudinal axis A in the first curved section 17 is continuous. As shown in Fig. 5, the projection of the longitudinal axis A onto the second plane 37 does not have an inflection point in the first curved section 17. However, it shall be understood that the longitudinal axis A could also have one or more inflections points in the first curved section 17 in which a direction of the second plane curvature changes.

To prevent the closure clips C received in the clip cavity 15 from getting stuck or jammed in the clip cavity 15, the preferred embodiment of the magazine bar 1 further comprises a clip feed drive 39. Here, the clip feed drive 39 is a pneumatic clip feed drive 39 that is configured to push closure clips C along the longitudinal axis A towards the outlet end 11. The clip feed drive 39 preferably comprises two pneumatically actuated pushers configured to advance closure clips along the longitudinal axis A. In other embodiments, a single pusher may be sufficient.

The clip feed drive 39 is particularly helpful, since the magazine bar 1 has a very complex shape in the shown preferred embodiment. Compared to a magazine bar having a substantially straight longitudinal axis A, friction between closure clips C received in the clip cavity 15 and the magazine bar 1 can be increased. The clip feed drive 39 can compensate for the increased friction. However, it shall be understood that a clip feed drive 39 is not essential and can be omitted.

In the present embodiment, the magazine bar 1 or its longitudinal axis A comprise a straight end section 41, a first straight section 43, a second curved section 45, a third curved section 47 and a second straight section 49. Along the central longitudinal axis A and starting from the outlet end 11 of the magazine bar 1, the sections are arranged in the following order: Straight end section 41, first curved section 17, first straight section 43, second curved section 45, third curved section 47 and second straight section 49. In the preferred embodiment, the third curved section 47 comprises a convex subsection defined in the first plane 23. The second curved section 45 is curved in the second plane 37. In other embodiments, the number of curved sections and/or straight sections, their arrangement along the longitudinal axis A and/or the curvature of the longitudinal axis A in the curved sections can vary.

The straight end section 41 is defined by the main body 3 as well as the end piece 5. The end piece 5 is provided for attaching the magazine bar 1 to the clipping machine 200. Preferably, the end piece 5 is at least partially formed from a different material than the main body 3 of the magazine bar 1. During operation, the end piece 5 is usually subjected to higher forces than the main body 3. The end piece 5 can therefore be formed from a metal, preferably steel, stainless steel or high grade steel, while the main body 3 of the magazine bar 1 can be made at least partially from a plastic material. However, it shall be understood that in other embodiments, the main body 3 could be formed from a metal and/or the end piece 5 could be formed from a plastic material.

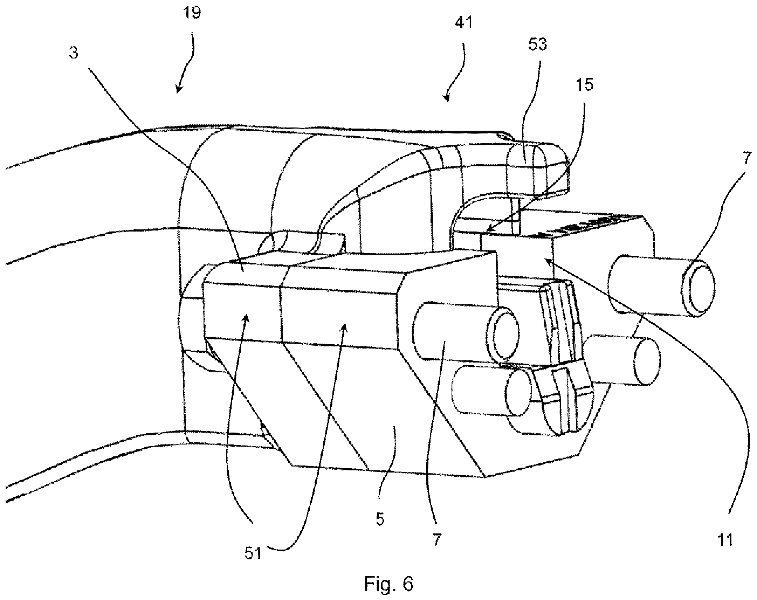

For attaching the magazine bar 1 to the clipping machine 200, the main body 3 and the end piece 5 each comprise wings 51 (Fig. 6). The wings 51 extend laterally from the main body 3 and the end piece 5 and each comprise a through hole, through which the screws 7 used for fixing the magazine bar 1 to the clipping machine 200 can be installed. The main body 5 has an upper projection 53 that projects along the longitudinal axis A over the end piece 5. Providing the upper projection 53 facilitates manufacturing of the end piece 5 while still providing a limit to the clip cavity 15 on all four sides around the longitudinal axis A. The end piece 5 and the main body 3 define the straight end section 41 together. The straight end section 41 can help to ensure that closure clips C are provided to the outlet end 11 in the correct orientation, which can be the predefined orientation 29. For example, the straight end section 41 can help to evenly distribute a pretension provided to closure clips C received in the clip cavity 15 by the first curved section 17.

The magazine bar 1 further comprises a saddle 55. The saddle 55 provides support for the closure clip C. Here, the saddle 55 is configured to extend between the clip legs 302 of closure clips C. Preferably, the saddle 55 is provided in the straight end section 41. In the embodiment shown in Fig. 6, the saddle 55 extends along the longitudinal axis A from the outlet end 11. A part of the saddle 55 projects from the clip cavity 15 along the longitudinal axis A. The saddle 55 can prevent deformation of closure clips C when a force is provided on the closure clips C in the direction of their respective clip height H.

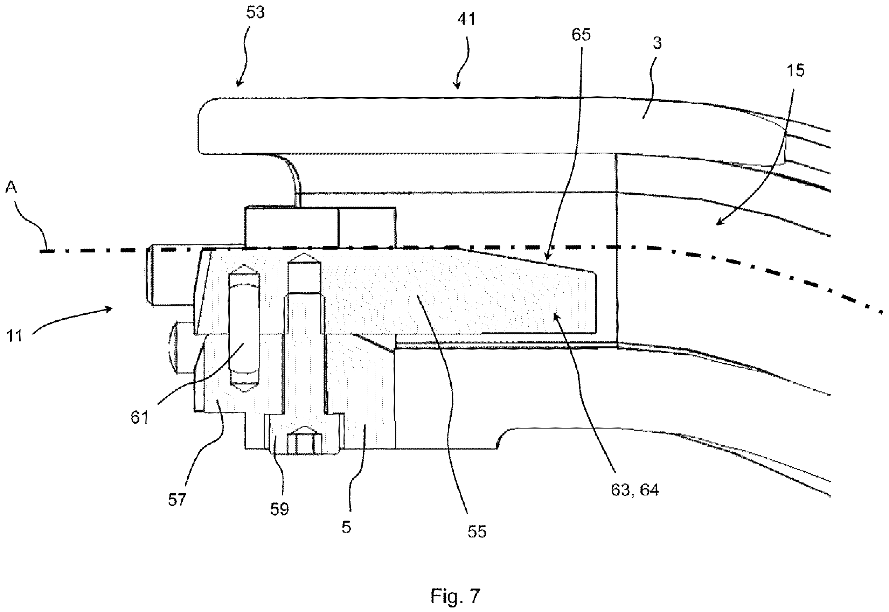

Fig. 7 shows a cut-view of the straight end section 41. As can be seen, the saddle 55 is attached to a base 57 of the end piece 5 via a screw 59. A locating pin 61 is provided to ensure correct orientation of the saddle 55 with respect to the longitudinal axis A and the clip cavity 15. The saddle 55 extends along the longitudinal axis A. A saddle tip 63 of the saddle 55 that is provided on a side of the saddle 55 opposite the outlet end 11 of the magazine bar 1, tapers along the longitudinal axis A. Here, a top surface 65 of the saddle tip 63 tapers down along the longitudinal axis A. The tapered saddle tip 63 can help to ensure that closure clips C advancing along the central longitudinal axis A through the clip cavity 15 slide onto the saddle 55 in the correct orientation. Additionally or alternatively, one or more lateral surface of the saddle 55 can taper down along the central longitudinal axis A. In the preferred embodiment, the tapered saddle tip 63 forms a tapered section 64 of the saddle 55.

To ensure secure attachment of the magazine bar 1 to the clipping machine 200, the magazine bar 1 further comprises a fixing bracket 67. Here, the fixing bracket 67 is provided on the first straight section 43, which can facilitate correct attachment of the magazine bar 1 to the clipping machine 200.

Fig. 8 illustrates a preferred embodiment of clipping machine 200 comprising a magazine bar 1 according to the preferred embodiment described above. Clipping machine 200 includes a clipping tool assembly 202 with a first pair of clipping tools including a first punch and a first die a, a second pair of clipping tools, arranged downstream of the first pair of clipping tools with respect to a feeding direction F. The second pair of clipping tools includes a second punch and a second die. The clipping machine 200 shown in Fig. 8 can simultaneously apply two closure clips C to a plait-like portion of a packaging and is therefore also referred to as double clipping machine. The clipping machine 200 comprises a punch drive 204 in the form of a piston/cylinder drive, for reversibly driving the first punch and the second punch towards the plait-like portion of the packaging.

For forming the plait-like portion of the packaging to be filled and closed, the clipping machine 200 further comprises gathering means 206. The gathering means 206 includes a first displacer unit 208 and a second displacer unit 210, with upper displacer elements 212, 214. Lower displacer elements corresponding to the respective upper displacer elements 212, 214 of the first displacer unit 208 and the second displacer unit 210 are not shown in Fig. 8.

For delivering closure clips C to the clipping tool assembly 202, the clipping machine 200 further comprises a magazine bar 1 as described above with reference to figures 1 to 7 and a second magazine bar 216. In the embodiment of the clipping machine 200 shown in Fig. 8, the longitudinal axis of the second magazine bar 216 comprises two convex sections 218 but no concave section. However, it shall be noted that in other embodiments of the clipping machine 200, the second magazine bar 216 can also comprise one or more concave sections. Both the first magazine bar 1 as well as the second magazine bar 216 are here provided with a clip feed drive 39 configured to advance closure clips C along the longitudinal axis A of the respective magazine bar 1, 216.

In the present embodiment, the clipping machine 200 is a double-clipping machine 200 that is configured to fill and close net shaped packaging with incoherent fillings, such as fruit, vegetables or the like. However, it shall be noted that the magazine bar 1 is also preferred for other types of clipping machines 200, in particular for clipping machines 200 for producing sausage-shaped products, in particular vegetarian, vegan or non-vegetarian sausages. Such clipping machines 200 can be single clipping machines, double clipping machines or can comprise more than two pairs of clipping tools.

### List of reference signs

- 1: magazine bar
- 2: magazine bar body
- 3: main body
- 5: end piece
- 7: screw
- 9: magazine bar inlet end
- 11: magazine bar outlet end
- 13: clip inlet
- 15: clip cavity
- 17: first curved section
- 19: first concave subsection
- 21: first convex subsection
- 23: first plane
- 25: second concave subsection
- 27: inflection point
- 29: predefined orientation
- 31: back side wall
- 33: leg side wall
- 35: lateral opening
- 37: second plane
- 39: clip drive
- 41: straight end section
- 43: first straight section
- 45: second curved section
- 47: third curved section
- 49: second straight section
- 51: wings
- 53: upper projection
- 55: saddle
- 57: base
- 59: screw
- 61: locating pin
- 63: saddle tip
- 65: top surface
- 67: fixing bracket
- 200: clipping machine
- 202: clipping tool assembly
- 204: punch drive
- 206: gathering means
- 208: first displacer unit
- 210: second displacer unit
- 212: first upper displacer element
- 214: second upper displacer element
- 216: second magazine bar
- 218: convex sections of the second magazine bar
- 300: clip back
- 302: clip legs
- 304: leg end
- A: longitudinal axis
- C: closure clips
- F: feeding direction
- H: clip height
- R1: height direction

## Claims

1. A magazine bar (1) for temporarily storing and delivering closure clips (C) to a clipping machine (200), in particular to an automated clipping machine (200),
wherein the magazine bar (1) comprises a clip cavity (15) for receiving closure clip (C) in a predefined orientation (29),
wherein the clip cavity (15) extends along a longitudinal axis (A) of the clip cavity (15) from a magazine bar inlet end (9) to a magazine bar outlet end (11), and
wherein the longitudinal axis (A) of the clip cavity (15) has at least a first curved section (17) having a first concave subsection (19) and a first convex subsection (21).

2. The magazine bar (1) according to claim 1, wherein the first convex subsection (21) is directly connected to the first concave subsection (19).

3. The magazine bar (1) according to claim 1 or 2, wherein the concave subsection (19) is arranged between the magazine bar outlet end (11) and the first convex subsection (21) along the longitudinal axis (A).

4. The magazine bar (1) according to any of the preceding claims, wherein the first curved section (17) of the longitudinal axis (A) of the clip cavity (15) further comprises a second concave subsection (25), wherein the second concave subsection (25) is preferably directly connected to the first convex subsection (21) such that the longitudinal axis (A) is continuously curved between the first concave subsection (19) and the second concave subsection (25).

5. The magazine bar (1) according to any of the previous claims, wherein at least the first concave subsection (19) and the first convex subsection (21) are defined in a projection of the longitudinal axis (A) onto a first plane (23) that is parallel to the longitudinal axis (A) and parallel to a height direction (R1) of the clip cavity (15), wherein the height direction (R1) corresponds to a clip height (H) of the closure clip (C) in the predefined orientation (29).

6. The magazine bar (1) according to claim 5, wherein the longitudinal axis (A) is curved in a projection onto a second plane (37) parallel to the first plane (23) in the first curved section (17), wherein preferably a direction of a second plane curvature of the projection of the longitudinal axis (A) onto the second plane (23) is constant.

7. The magazine bar (1) according to any of the previous claims, further comprising a first straight section (43) of the clip cavity (15), wherein the first curved section (17) is provided between the first straight section (43) and the magazine bar outlet end (11), wherein the magazine bar (1) preferably further comprises a fixing bracket (67) for fixing the magazine bar (1) to the clipping machine (200), wherein the fixing bracket (67) is provided at the first straight section (43).

8. The magazine bar (1) according to any of the previous claims, wherein the clip cavity (15) of the magazine bar (1) has a straight end section (41) extending along the longitudinal axis (A) from the outlet end (11) towards the inlet end (9).

9. The magazine bar (1) according to any of the previous claims, further comprising a saddle (55), wherein the saddle (55) at least partially extends along the longitudinal axis (A) in the clip cavity (15) and wherein the saddle (55) is configured to extend between legs (302) of one or more closure clips (C) received in the clip cavity (15).

10. The magazine bar (1) according to claim 9, wherein the saddle (55) is provided at least on an end piece (5) of the magazine bar (1), wherein the end piece (5) is attached to a magazine bar main body (3) at a first end piece side, and wherein the magazine bar outlet end (11) is provided on a second end piece side opposite the first end piece side of the end piece (5).

11. The magazine bar (1) according to claims 9 or 10, wherein the saddle (55) comprises a tapered section (64), wherein the tapered section (64) tapers away from the magazine bar outlet end (11) against a direction of travel of closure clips (C) through the clip cavity (15).

12. The magazine bar (1) according to any of the previous claims, further comprising a second curved section (45) in which the longitudinal axis (A) of the magazine bar (1) is curved.

13. The magazine bar (1) according to any of the previous claims, further comprising a clip feed drive (39) configured to move one or more closure clips (C) along the longitudinal axis (A).

14. The magazine bar (1) according to any of the previous claims, wherein the first curved section (17) of the longitudinal axis (A) of the clip cavity (15) is curved such that a pretension is applied to a closure clip (C) at the outlet end (11) that prevents jamming of a closure clip (C).

15. A clipping machine (200) comprising a clipping tool assembly (202) for applying one or more closure clip (C) to a packaging and a magazine bar (1) according to any of the previous claims 1 to 13 for providing closure clip (C) to the clipping tool assembly (202).
